# EUROPÄISCHE PATENTSCHRIFT

(11) **EP 2 490 865 B1**
(45) Veröffentlichungstag und Bekanntmachung des Hinweises auf die Patenterteilung: **26.06.2013**
(21) Anmeldenummer: 10770755.6
(22) Anmeldetag: 08.10.2010
(51) Int. Cl.: B25F 5/00, F16P 3/12, F16P 3/14

(54) **SCHUTZSENSORIK FÜR HANDGEHALTENE ELEKTROWERKZEUGMASCHINE**
PROTECTIVE SENSOR SYSTEM FOR A HAND-HELD POWER TOOL
LOGIQUE DE DÉTECTEURS DE PROTECTION POUR MACHINE-OUTIL ÉLECTRIQUE PORTATIVE

(30) Priorität: 23.10.2009 DE 102009045944
(43) Veröffentlichungstag der Anmeldung: 29.08.2012
(73) Patentinhaber: Robert Bosch GmbH, 70442 Stuttgart (DE)
(72) Erfinder: ROSER, Jochen, 71636 Ludwigsburg (DE)
(86) Internationale Anmeldenummer: PCT/EP2010/065120
(87) Internationale Veröffentlichungsnummer: WO 2011/047976

(56) Entgegenhaltungen:
- EP-A2- 0 341 942
- WO-A1-97/12174
- WO-A1-2004/010387
- WO-A2-96/22175
- US-B1- 6 204 592
- US-B2- 7 253 541

## Beschreibung

### Stand der Technik

Die Erfindung geht aus von einer handgehaltenen Elektrowerkzeugmaschine, umfassend ein Gehäuse mit einem Griffbereich, einem Werkzeugbereich für ein linear und/oder oszillierend antreibbares Werkzeug, ein gehäuseseitiges Bedienteil zur benutzerseitigen Aktivierung des Werkzeugs und/oder der Elektrowerkzeugmaschine, eine Antriebseinheit zur Erzeugung einer Arbeitsbewegung des Werkzeugs, eine Elektronikeinheit zum Beaufschlagen der Antriebseinheit mit wenigstens Steuer und/oder Regelsignalen, einer Betriebsspannungseinheit zur Bereitstellung einer elektrischen Gleichspannung, wobei die Antriebseinheit wenigstens einen Anregungsaktor mit einem Volumen anregungsaktivem Material umfasst, welcher im Betrieb von der Betriebsspannungseinheit elektrisch versorgt ist und von der Elektronikeinheit gesteuert oder geregelt wird.

Handgehaltene Elektrowerkzeugmaschinen z.B. EP0341942 zeichnen sich dadurch aus, dass diese tragbar sind und von einem Bediener im Betrieb in der Hand gehalten und geführt werden. Sie können kabellos über Batteriepacks oder mit Netzstrom betrieben werden. Insbesondere bestehen diese in der Regel aus nur einem Gehäuse, welches vollständig vom Nutzer gehalten wird. Die in der Regel fest installierten, nicht handgehaltenen Werkzeugmaschinen verfügen über eine geeignete Einhausung oder erfordern eine Zweihandbedienung, wodurch ein versehentliches Berühren der aktiven Teile, insbesondere des aktiven Werkzeugbereichs, des Ultraschallschwingers durch den Bediener verhindert werden kann. Die hier betrachten handgeführten Elektrowerkzeugmaschinen können in der Regel mit einer Hand geführt werden, so dass die Gefahr besteht, dass der Benutzer mit der freien Hand den Werkzeugbereich, insbesondere eine beispielsweise in Klingenform ausgeführten Sonotrode einer ultraschallangetriebenen Werkzeugmaschine berühren kann und somit eine erhebliche Verletzungsgefahr besteht. Da bei solchen handgeführten ultraschallbetriebenen Werkzeugmaschinen die vorgenannten Schutzmechanismen nicht genutzt werden können und in der Regel ein Benutzer mit einer Hand ein zu bearbeitendes Werkstück und mit der anderen Hand das Werkzeug führt, kann bei ungünstigen Bedingungen zum Beispiel Abrutschen oder einem versehentlichen Stoß des Benutzers ein ungewolltes Berühren der aktiven Sonotrode erfolgen, wodurch sich der Benutzer schwere Verletzungen zufügen kann.

Aus dem Stand der Technik sind Verfahren und Vorrichtungen zum Erkennen einer ungewollten Annäherung an gefährliche Werkzeugbereiche bekannt. So zeigt beispielsweise die DE 696 24 124 T2 ein Verfahren und eine Vorrichtung zur Erfassung der Distanz zwischen einem ersten Objekt und einem zweiten Objekt, wobei mittels eines Sende- und Empfangssystems ein Näherungssignal auf kapazitiver Basis zwischen dem ersten und dem zweiten Objekt ausgetauscht wird. Bereits vor dem Berühren können Schutzmaßnahmen eingeleitet werden. Allerdings ist ein sehr hoher Schaltungsaufwand erforderlich.

In der US 7 253 541 B2 ist eine handgehaltene Werkzeugmaschine offenbart, die einen Handannäherungssensor umfasst, der eine Hand eines Benutzers erkennen kann und falls keine Hand am Griffteil der Werkzeugmaschine erkannt wird, ein Abschalten der Werkzeugmaschine bewirken kann.

Aus der WO 96/22175 A2 ist eine Sicherheitseinrichtung für ein Handwerkzeug bekannt, die auf Basis eines Körperstroms eines galvanisch angeschlossenen Fühlers, der vom Werkzeug über den Körper des Benutzers zurück zum Werkzeug fließen kann, den Antrieb vom Werkzeug zu trennen.

### Offenbarung der Erfindung

Die Erfindung geht aus von einer handgehaltenen Elektrowerkzeugmaschine umfassend ein Gehäuse mit einem Griffbereich, einem Werkzeugbereich für ein linear und/oder oszillierend antreibbares Werkzeug, ein gehäuseseitiges Bedienteil zur benutzerseitigen Aktivierung des Werkzeugs und/oder der Elektrowerkzeugmaschine, eine Antriebseinheit zur Erzeugung einer Arbeitsbewegung des Werkzeugs, eine Elektronikeinheit zum Beaufschlagen der Antriebseinheit mit wenigstens Steuer- und/oder Regelsignalen, einer Betriebsspannungseinheit zur Bereitstellung einer elektrischen Gleichspannung, wobei die Antriebseinheit wenigstens einen Anregungsaktor mit einem Volumen anregungsaktivem Material umfasst, welcher im Betrieb von der Betriebsspannungseinheit elektrisch versorgt ist und von der Elektronikeinheit gesteuert oder geregelt ist.

Es wird vorgeschlagen, dass eine Schutzsensoreinheit, die einen Näherungs - oder Berührungssensor zur Berührungserfassung eines Körperteils eines Benutzers mit dem Werkzeugbereich so mit der Antriebseinheit gekoppelt ist, dass bei Berühren eines kritischen Bereichs der Elektrowerkzeugmaschine eine Abschaltung der Antriebseinheit erfolgt.

Mit anderen Worten umfasst die handgehaltene Elektrowerkzeugmaschine eine Schutzsensoreinheit, die sicherstellt, dass bei einem Berühren mit einem Körperteil, insbesondere mit einer Hand eines Benutzers, eines gefährlichen Bereichs der Elektrowerkzeugmaschine, beispielsweise einer Sonotrode eines Leistungsultraschallwerkzeugs, eine automatische Abschaltung der Antriebseinheit erfolgt, so dass der Benutzer vor Verletzungen geschützt ist. Hierdurch kann das Verletzungspotential insbesondere beim Schneiden oder Verbrennen mittels eines handgeführten Ultraschallwerkzeugs deutlich gesenkt werden. Grundsätzlich kann ein Verfahren wie in der DE 696 24124 T2 zur Auswertung herangezogen werden. Im Gegensatz zur Offenbarung der DE 696 24 124 T2 wird jedoch stets die Berührung des gefährlichen Bereichs, etwa der Sonotrode, erkannt, was die Auswerteelektronik erheblich vereinfacht und speziell für eine handgehaltene Elektrowerkzeugmaschine geeignet macht.

Erfindungsgemäß ist die Schutzsensoreinheit in der Elektronikeinheit angeordnet und der Näherungs- oder Berührungssensor im oder am Werkzeugbereich. So kann die Schutzsensoreinheit beispielsweise in einer Platine einer Elektronikeinheit, die vorzugsweise im Gehäuse der Werkzeugmaschine angeordnet ist, ausgebildet sein, wobei ein zusätzlicher Teile- und Platzaufwand für eine separate Platine für die Schutzsensoreinheit entfallen kann. Zur Feststellung einer Berührung durch den Benutzer wird hierbei vorteilhafterweise der Näherungs- oder Berührungssensor unmittelbar im oder am Werkzeugbereich angeordnet, um zuverlässig ein Berühren durch einen Körperteil des Benutzers feststellen zu können.

Die grundsätzliche Ausführung des Näherungs- oder Berührungssensors kann beliebig sein. So ist es möglich, den Näherungs- oder Berührungssensor als Fehlerstromsensor zur Messung eines Fehlerstroms zwischen mindestens einem leitenden Teil des Griffbereichs des Werkzeugs über den Körper des Benutzers zum Werkzeugbereich ausgelegt. So kann im Griffbereich eine leitende Oberfläche, beispielsweise ein oder mehrere Berührungskontakte angeordnet sein, so dass ein Benutzer, der die Werkzeugmaschine führt, mit seiner werkzeugführenden Hand einen elektrischen Kontakt mit dem leitenden Teil des Griffbereichs herstellt. Eine weitere oder mehrere Elektroden können im Werkzeugbereich, beispielsweise als metallausgeführte Sonotrode, vorgesehen sein. Berührt nun ein Benutzer mit seiner freien Hand die Sonotrode, so fließt ein kleiner, vom Benutzer nicht wahrnehmbarer Fehlerstrom zwischen Griffbereich, werkzeugführender Hand über den Körper des Benutzers zu der den Werkzeug bereich berührenden Hand, wobei der Fehlerstromsensor eine ungewollte Berührung des Werkzeugbereichs feststellen kann. Hierdurch ist in einfacher Weise eine Berührungsdetektion geschaffen, die ohne aufwändigen Schaltungsaufwand äußerst zuverlässig ein Berühren des Werkzeugbereichs feststellen und die Antriebseinheit abschalten kann.

Erfindungsgemäß umfasst der Näherungs- oder Berührungssensor einen Schwingkreisverstimmungssensor zur Messung einer Verstimmung eines hochfrequenten Schwingkreises. So kann beispielsweise im oder am elektrisch leitenden Werkzeugbereich, beispielsweise einer aus Metall gefertigten Sonotrode, ein elektrischer Schwingkreis so angeschlossen sein, dass die Berührung der Sonotrode ein die Frequenz des Schwingkreises beeinflussendes Element darstellt. Bei Berühren der Sonotrode verändern sich die elektrische Eigenschaften, insbesondere Kapazität und Dämpfung des Schwingkreises, so dass hierdurch der Schwingkreis in seiner Resonanzfrequenz verändert wird. Dabei üben verschiedene Materialien verschiedene Einflussfaktoren auf die Schwingkreisverstimmung aus, weil insbesondere organisches Material eine charakteristische Veränderung der Schwingkreisfrequenz nach sich zieht. Ist der Werkzeugbereich als äußerst sensitives Element des Schwingkreises ausgelegt, so kann bereits eine Näherung eines Materials an den Werkzeugbereich detektiert werden kann, so dass ein Schwingkreisverstimmungssensor mit hoher Genauigkeit das Annähern oder Berühren organischen Materials, insbesondere der Hand eines Benutzers, feststellen kann, und eine frühzeitige Abschaltung der Antriebseinheit bewirken kann, um den Benutzer vor Verletzungen zu schützen.

Alternativ und ebenfalls erfindungsgemäß umfasst der Näherungs- oder Berührungssensor einen Bewegungssensor. Der Bewegungssensor kann derart ausgestaltet sein, dass er eine Bewegung in räumlicher Nähe zum Werkzeugbereich feststellen kann. Hierzu bietet es sich in vorteilhafter Weise an, einen kapazitiven Näherungssensor, wie er beispielsweise aus der DE 696 24 124 T2 hervorgeht, anzuwenden. In diesem Fall bildet der Benutzer wiederum ein Teil eines elektrischen Schaltkreises, und bildet eine erste Elektrode einer Kapazität aus, wobei der Nutzer beispielsweise über einen leitenden Bereich der Griffpartie der Elektrowerkzeugmaschine mit einem ersten Kontakt der Schutzelektronik verbunden ist. Die zweite Elektrode wird vom Werkzeugbereich selbst gebildet, der hierzu vorzugsweise metallisch ausgebildet ist. Nähert sich ein Körperteil des Benutzers dem Werkzeugbereich an, so erhöht sich die Kapazität, die durch diese beiden Elektroden gebildet wird, so dass eine Näherung und insbesondere bei Veränderung der Kapazität eine nähernde Bewegung feststellbar ist, wobei zumindest bei Unterschreitung einer kritischen Distanz die Antriebseinheit abgeschaltet werden kann, um den Werkzeugbereich zu deaktivieren.

In einem weiteren vorteilhaften Ausführungsbeispiel kann der Näherungs- oder Berührungssensor als PIR-Sensor aufgebaut sein. Ein PIR-Sensor ist ein elektronischer Sensor, der Bewegungen in seiner näheren Umgebung erkennt und somit als elektronischer Bewegungssensor arbeiten kann. Der PIR-Sensor (PIR=Passive Infrared) reagiert dabei unter Ausnutzung der Pyroelektrizität seiner Empfängerfläche auf eine Temperaturänderung, die insbesondere auf die Wärmestrahlung eines Menschen eingerichtet werden kann. Ein PIR-Sensor reagiert nur auf sich ändernde Signale und ist damit vorzüglich zur Feststellung des Eintritts eines Körperteils eines Benutzers in den Detektionsbereich des Sensors geeignet.

Nach einer weiteren vorteilhaften Ausführung ist der Näherungs- oder Berührungssensor als Ultraschallsensor ausgebildet. Ein Ultraschallsensor umfasst zumeist einen Sender und Empfänger und spricht auf Reflexionen der abgestrahlten Ultraschallstrahlung im Überwachungsbereich an, und kann somit auf Basis eines Dopplereffekts in den Detektionsbereich eintretende Gegenstände erkennen. Ein solcher Ultraschallbewegungssensor kann derart im Werkzeugbereich angeordnet werden, dass er zwar in Arbeitsrichtung der Elektrowerkzeugmaschine blind ist, jedoch vornehmlich in Richtungen, in denen ein zufälliges Berühren des Werkzeugbereichs durch den Benutzer zu erwarten ist, eine hohe Detektionssensitivität aufweist. Tritt nun eine ungewollte Berührung des Werkzeugbereichs ein, so kann der Ultraschallbewegungssensor frühzeitig eine solche Bewegung erkennen und die Antriebseinheit deaktivieren. Somit kann ein Bewegungssensor schon weit vor einem Berühren des gefährlichen Werkzeugbereichs eine Abschaltung der Antriebseinheit bewirken und einen präventiven Schutz des Benutzers gewährleisten.

Gemäß einer vorteilhaften Ausgestaltung kann der Näherungs- oder Berührungssensor mit der Elektronikeinheit zur Schnellabschaltung der Antriebseinheit insbesondere zur Ausbildung eines elektrischen Kurzschlusses des Anregungsaktors verbunden sein. In der Regel umfasst der Anregungsaktor einen piezoelektrischen oder magnetostriktiven Wandler, der nach Abschaltung der hochfrequenten Schwingung, die ihn antreibt, aufgrund innerer Dämpfungswerte in wenigen Millisekunden zum Stillstand kommt. Jedoch kann insbesondere durch Resonanzerscheinungen im Werkzeugbereich, insbesondere in einer Sonotrode, mechanische Energie langsam abklingen, so dass selbst nach Abschaltung der Antriebseinheit ein längerer Nachklingvorgang stattfindet, in dem eine Verletzungsgefahr des Benutzers droht. Um die Abschaltzeit zu verkürzen, kann der Näherungs- oder Berührungssensor mit der Elektronikeinheit, die in der Regel die Schutzsensoreinheit umfasst, zur Schnellabschaltung so verbunden sein, dass insbesondere durch Ausbildung eines elektrischen Kurzschlusses oder durch Aufschaltung einer Gleichspannung, z.B. einer konstanten Spannung, oder eines Dämpfungswiderstandes an den Anregungsaktor ein möglichst schneller Abbau der mechanischen Energie des Werkzeugbereichs erreicht wird. In einer weiteren Ausführungsvariante kann der Anregungsaktor von der Ansteuerelektronik antizyklisch angeregt werden, sodass die Ultraschallschwingungen aktiv gedämpft werden. Die Maßnahmen können selbstverständlich auch in Kombination vorgesehen sein.

In einer weiteren vorteilhaften Ausgestaltung ist die Schutzsensoreinheit ausgebildet, eine Abschaltung der elektrischen Gleichspannung der Betriebsspannungseinheit zu bewirken. Erkennt die Schutzsensoreinheit ein Nähern oder Berühren des Werkzeugbereichs, so kann neben der Abschaltung des Anregungsaktuators die elektrische Spannungsversorgung, das heißt die Gleichspannung der Betriebsspannungseinheit abgeschaltet werden, um weitere aktive Teile der Elektrowerkzeugmaschine zu deaktivieren. Insbesondere bei Elektrowerkzeugmaschinen, die gekoppelte Anregungsaktoren oder sowohl Ultraschallanregungsaktoren als auch motorbetriebene Aktoren umfassen, bewirkt das Abschalten der Spannungsversorgung eine komplette Deaktivierung der Werkzeugmaschine, so dass jegliche mechanisch aktive Bereiche der Maschine abgeschaltet und somit eine Verletzung des Benutzers ausgeschlossen werden kann.

Gemäß einer weiteren vorteilhaften Ausgestaltung ist die Schutzsensoreinheit ausgebildet, eine Verriegelung oder Deaktivierung des Bedienteils zu bewirken, wenn ein Nähern oder Berühren des Werkzeugbereichs erkannt wird. Durch Verriegeln oder Deaktivieren des Bedienteils wird der Benutzer gezwungen, die Elektrowerkzeugmaschine mechanisch oder elektronisch zu entriegeln oder in anderer Weise wieder zu aktivieren, um somit seine Arbeitsposition und eine gefährdende Haltung der Elektrowerkzeugmaschine zu korrigieren. So kann zur Wiederinbetriebnahme vorgesehen sein, dass zuerst ein Quittungssignal abgegeben werden muss, z.B. über einen Resetknopf, und/oder der Bediener muss das Gerät erst ausschalten und dann wieder einschalten, und/oder ein Wiedereinschalten ist erst nach einer vorgegebenen Wartezeit möglich oder eine andere geeignete Maßnahme. Entsprechende Einrichtungen können sind dazu vorgesehen sein.

Des Weiteren wird dadurch der Nutzer gezwungen, sein weiteres Verhalten im Umgang mit der Elektrowerkzeugmaschine zu bedenken, wodurch die Disziplin bezüglich einer unfallverhütenden Anwendung der Elektrowerkzeugmaschine gesteigert werden kann.

In einer vorteilhaften Ausgestaltung kann die Schutzsensoreinheit ausgebildet sein, bei Unterschreiten einer vorbestimmbaren Näherungsdistanz oder Berührungsstärke die Ausgabe eines optischen und/oder akustischen und/oder haptischen Warnsignals zu bewirken. Insbesondere bei Verwendung eines Näherungssensors, aber auch bei Verwendung eines Berührungssensors können bei Unterschreiten einer vorbestimmbaren Distanz oder Berühren mit einer gewissen Berührungskraft auch ohne Abschaltung des Anregungsaktors oder bei einer nur geringfügigen Berührung des Werkzeugbereichs zumindest eine Signalisierung in Form eines optischen oder akustischen Warnsignals oder eines haptischen Warnsignals, beispielsweise durch Vibrieren der Elektrowerkzeugmaschine, den Benutzer darauf aufmerksam machen, dass er in den Gefahrenbereich der Maschine eindringt, und dass ein automatisches Abschalten zumindest des Anregungsaktors bevorsteht. So können insbesondere bei Verwendung eines Näherungssensors bei Unterschreiten einer noch nicht als kritisch zu bewertenden Distanz bereits Warnsignale abgegeben werden, um frühzeitig den Benutzer vor einem Berühren zu warnen, ohne dass der Arbeitsvorgang unterbrochen werden muss.

Gemäß einer vorteilhaften Ausgestaltungsvariante kann die Schutzsensoreinheit ausgebildet sein, eine Abschaltung der Antriebseinheit bei Unterschreiten einer vorbestimmbaren Berührungsstärke zu bewirken. Somit kann die Schutzsensoreinheit so ausgestaltet sein, dass erst bei Berühren des Werkzeugbereichs mit einer kritischen Berührungsstärke in einer gewissen Höhe eine Abschaltung des Anregungsaktors bewirkt wird. Somit bleiben unkritische Näherungsdistanzen oder nur ein leichtes Berühren bzw. Streifen des Werkzeugbereichs ohne Konsequenz, erst bei kritisch zu beurteilenden Annäherungen des Benutzers an den Werkzeugbereich erfolgt ein automatisches Abschalten der Antriebseinheit, so dass die Fälle ungewollten Abschaltens deutlich reduziert werden können, aber dennoch die Betriebssicherheit für den Benutzer gewährleistet ist.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ausführungsbeispiel einer handgehaltenen Elektrowerkzeugmaschine in einer Ausgestaltung als Schneidgerät mit Schutzsensoreinheit;
- Fig. 2: ein weiteres Ausführungsbeispiel einer handgehaltenen Elektrowerkzeugmaschine mit Schutzsensoreinheit in der Ausgestaltung als Bohrgerät;
- Fig. 3: eine Prinzipsskizze einer Ansteuerung eines Anregungsaktors mit einer Wechselspannungsversorgung mit Netzstrom und einer Gleichspannungsversorgung mit einem Batteriepack sowie einer Schutzsensoreinheit und einem Näherungs- oder Berührungssensor;
- Fig. 4: eine Prinzipsskizze eines weiteren Ausführungsbeispiels einer Ansteuerung eines Anregungsaktors mit einer Betriebsspannungseinheit, einer Elektronikeinheit und einer Schutzsensoreinheit mit Näherungs- oder Berührungssensor;
- Fig. 5: schematisch ein Ausführungsbeispiel einer Schutzsensoreinheit einer Elektrowerkzeugmaschine mit Fehlerstromsensor;
- Fig. 6: schematisch ein weiteres Ausführungsbeispiel einer Elektrowerkzeugmaschine mit Schwingkreisverstimmungssensor; und
- Fig. 7: ein drittes Ausführungsbeispiel in schematischer Ansicht mit kapazitivem Näherungssensor.

### Ausführungsformen der Erfindung

In den Figuren sind gleiche oder gleichartige Komponenten mit gleichen Bezugszeichen beziffert.

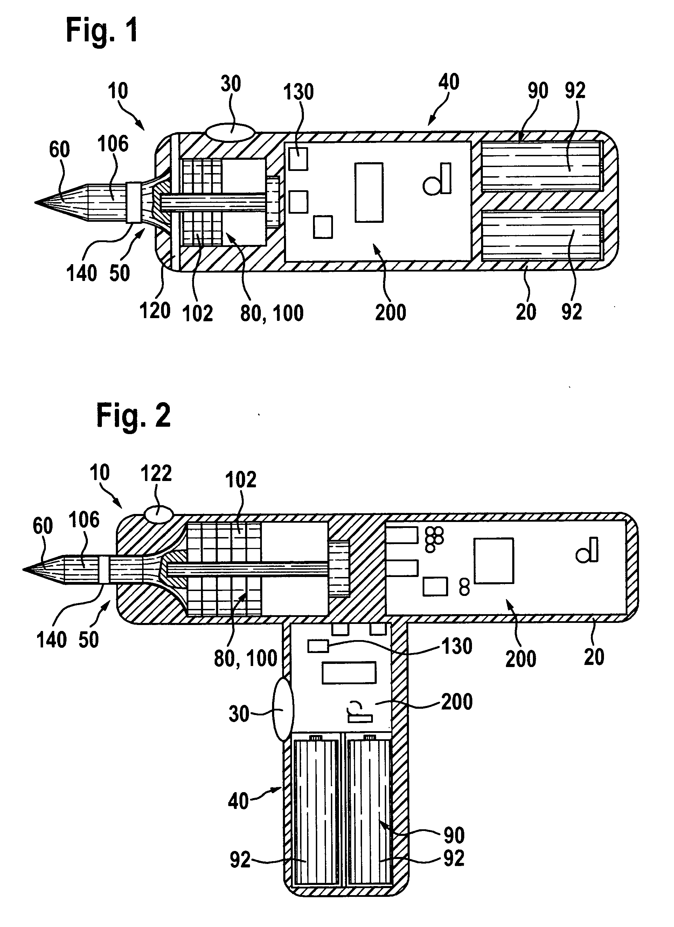

Zur Erläuterung der Erfindung zeigen die Figuren 1 und 2 verschiedene Beispiele von handgehaltenen Elektrowerkzeugmaschinen 10. Fig. 1 zeigt ein Schneidgerät mit langgestreckter Gehäuseform; Fig. 2 zeigt ein Bohrgerät mit T-förmiger Gehäuseform.

Die handgehaltene Elektrowerkzeugmaschine 10 umfasst ein Gehäuse 20 mit einem Griffbereich 40. Ein Bediener hält die Elektrowerkzeugmaschine 10 an dem Griffbereich 40 und kann die Elektrowerkzeugmaschine 10 führen. Die Elektrowerkzeugmaschine 10 umfasst ferner einen Werkzeugbereich 50 für ein linear und/oder oszillierend antreibbares Werkzeug 60, etwa ein Messer (Fig. 1) oder einen Bohrer (Fig. 2) oder ein anderes Werkzeug entsprechend einem anderen Gerätetyp. Ein gehäuseseitiges Bedienteil 30 dient zur benutzerseitigen Aktivierung des Werkzeugs 60 und/oder der Elektrowerkzeugmaschine 10.

Im Gehäuse 20 ist eine Antriebseinheit 80 angeordnet, die in den Beispielen gemäß Fig. 1 und Fig. 2 nur eine Antriebskomponente umfasst, die durch einen Anregungsaktor 100 gebildet ist. Dieser kann als Piezo-angeregter Langevin-Schwinger (auch Piezoaktor genannt) ausgebildet sein, der ein Volumen piezoelektrisch aktiven Materials 102 umfasst, z.B. piezokeramische Scheiben, die zusammengepresst sind und die bei Beaufschlagung mit elektrischer Spannung eine Längenänderung durchführen. Bei Beaufschlagung mit hochfrequenter elektrischer Spannung wird in an sich bekannter Weise Ultraschall generiert, der über einen Koppelelement 106 zu einem Werkzeug 60 geleitet wird. Das Koppelelement 106 kann eine an sich bekannte Sonotrode sein.

Eine im Gehäuse 20 angeordnete Elektronikeinheit 200 dient zum Beaufschlagen der Antriebseinheit 80 mit wenigstens Steuer- und/oder Regelsignalen, sowie der Spannungsversorgung des Anregungsaktors 100. Eine Betriebsspannungseinheit 90, hier als Batterie- oder Akkupack mit Batterien oder wiederaufladbaren Akkus 92 ausgebildet, dient zur Bereitstellung einer elektrischen Gleichspannung für die Elektronikeinheit 200, welche die Betriebsspannung in ein hochfrequentes Spannungssignal umsetzt, mit dem der Anregungsaktor 100 in gewünschter Weise zu Schwingungen angeregt wird. Die Elektronikeinheit 200 kann auf einer (Fig. 1) oder mehreren Platinen angeordnet sein (Fig. 2) Die Aktivierung des Werkzeugs 60 durch den Aktivierungsaktor 30 kann mit einem Signalmittel 122 (Fig. 2) angezeigt werden.

In den Elektrowerkzeugen 10 nach Fig. 1 und 2 ist im Koppelelement 106 des Werkzeugbereichs 50 ein Näherungs- oder Berührungssensor 140 angeordnet, der - nicht dargestellt - mit der in der Elektronikeinheit 200 angeordneten Sensoreinheit 130 verbunden ist. Nimmt der Näherungs- oder Berührungssensor 140 eine Berührung beispielsweise einer Hand eines Benutzers war, so wird diese Information an die Sensoreinheit 130 weitergeleitet, die eine automatische Deaktivierung des piezoelektrisch aktiven Materials 102 des Anregungsaktors 100 der Antriebseinheit 80 bewirken kann oder eine Deaktivierung der Betriebsspannungszufuhr an die Elektrowerkzeugmaschine 10 bewirkt, so dass nicht nur die Antriebseinheit 80 und der Anregungsaktor 100 deaktiviert werden kann, sondern weitere elektrische Teile der Werkzeugmaschine, wie Regel- und Steuereinheit der Elektronikeinheit 200 befinden, ebenfalls abgeschaltet werden können. Stellt der Näherungs- oder Berührungssensor 140 ein Entfernen der Benutzerhand fest, so gibt er an die Schutzsensoreinheit 130 ein entsprechendes Signal, um ein erneutes Aktivieren der Antriebseinheit 80 bzw. der Betriebsspannungseinheit einzuleiten.

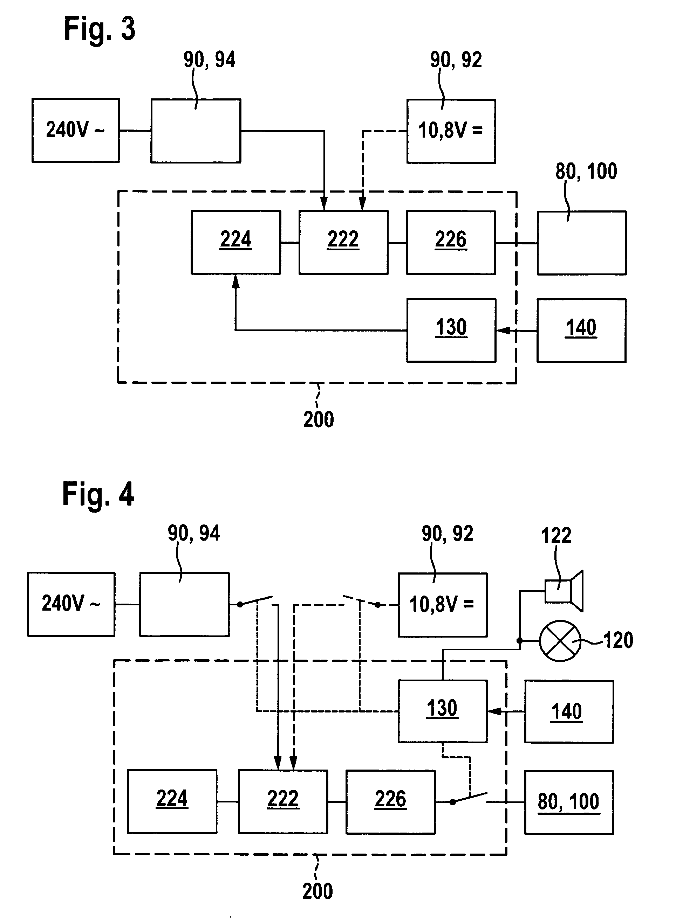

Fig. 3 zeigt schematisch eine elektrische Verbindung zwischen den elektrischen Hauptbestandteilen der Elektrowerkzeugmaschine. Hierzu umfasst die Elektrowerkzeugmaschine einen Anregungsaktor 100, beispielsweis in Form eines Piezoaktuators in der Antriebseinheit 80, die mit einer Wechselspannungsversorgung 94 aus einem Versorgungsnetz oder einer Gleichspannungsversorgung 92 mit einem Batteriepack betrieben werden kann. Bei Netzversorgung der Elektronikeinheit 200 zum Beispiel mit 230 Volt Wechselspannung ist eine Baugruppe 94 vorgesehen, welche die Wechselspannung gleichrichtet und glättet. Die Elektronikeinheit 200 umfasst eine Leistungserzeugungseinheit 222, in die die Gleichspannung eingespeist wird, und die über eine entsprechende Filtereinrichtung 226 an den Anregungsaktor 100 gekoppelt ist. Eine Regeleinheit 224 stellt die Regelsignale für den Anregungsaktor 100 bereit. In räumlicher Nähe zum Werkzeugbereich, insbesondere in Nähe der Antriebseinheit 100 ist ein Näherungs- oder Berührungssensor 140 angeordnet, der eine Berührung eines Körperteils eines Benutzers mit dem Werkzeugbereich 50, insbesondere mit der Sonotrode erfassen kann. Dieser gibt seine Signale an eine Schutzsensoreinheit 130, die in der Elektronikeinheit 200 umfasst ist, weiter. Wird ein versehentliches Nähern oder Berühren des Werkzeugbereichs durch die Näherungs- oder Berührungssensor 140 festgestellt, so gibt die Schutzsensoreinheit 130 ein Signal an die Regeleinheit 224 aus, wodurch die Leistungserzeugungseinheit 222 abgeschaltet wird. Somit wird die Antriebseinheit 80 stromlos, und die Elektrowerkzeugmaschine deaktiviert, so dass keine weitere Gefährdung des Benutzers auftreten kann.

Fig. 4 zeigt eine weitere Variante des Schaltprinzips der Fig. 3. Dabei ist die Schutzsensoreinheit 130 mit zwei weiteren Schutzsensorausschaltgliedern verbunden, die die Betriebsspannungseinheiten 90, 94 für den Netzspannungsbetrieb oder 90, 92 für den Batteriebetrieb von der Elektronikeinheit 200 im Falle eines Berührens oder Näherns des Werkzeugbereichs abschalten können. In einer anderen Ausführungsvariante kann durch die Schutzsensoreinheit 130 auch die Energieversorgung direkt am Anregungsaktor 100 abgeschaltet werden Des Weiteren ist die Schutzsensoreinheit 130 mit einem akustischen und/oder optischen Signalwarngeber 122, 120 verbunden, um im Fall eines Näherns des Werkzeugbereichs bzw. Berührens des Werkzeugbereichs ein akustisches und/oder optisches Signal auszugeben, um den Benutzer zu warnen, dass demnächst eine automatische Abschaltung der Elektrowerkzeugmaschine erfolgen wird.

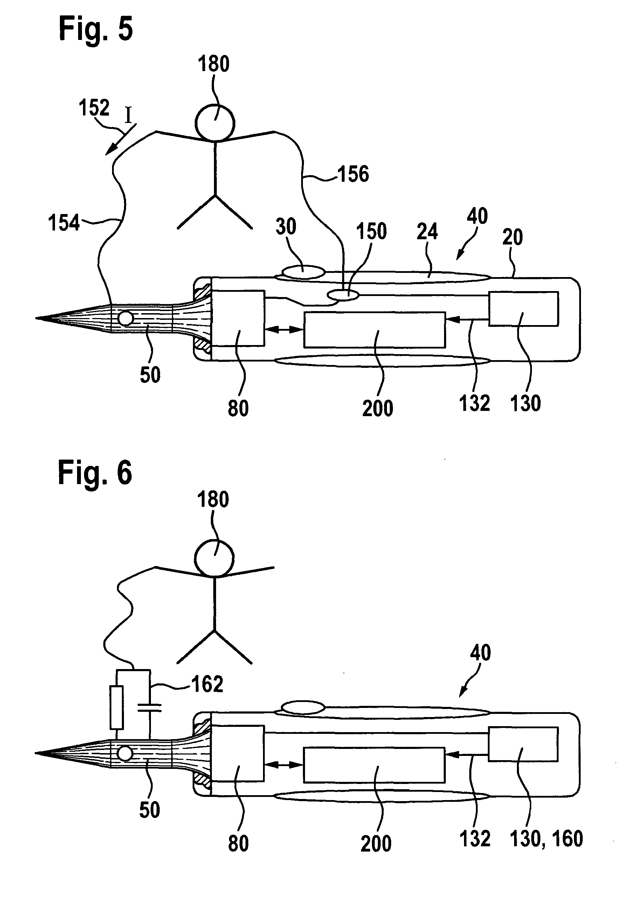

In Fig. 5 ist ein Ausführungsbeispiel einer handgehaltenen Elektrowerkzeugmaschine, die einen Fehlerstromsensor 150 zur Erzeugung eines Spannungspotentials und zur Messung eines dadurch fließenden Fehlerstroms zwischen mindestens einem leitenden Teil des Griffbereichs 40 eines Gehäuses 20 über den Körper des Benutzers 180 zum Werkzeugbereich 50 umfasst. Hierzu ist im Gehäuse 20 der Elektrowerkzeugmaschine 10 eine Schutzsensoreinheit 130 untergebracht ist, die mittels einer Abschaltsignalleitung 132 mit der Elektronikeinheit 200 verbunden ist, welche elektrisch mit der Antriebseinheit 80 zur Erregung hochfrequenter Ultraschallschwingungen gekoppelt ist. Des Weiteren ist in dem Gehäuse 20 ein Fehlerstromsensor 150 angeordnet, dessen erste Elektrode mit einem leitfähigen Teil des Griffgehäuses 24 verbunden ist, der sich in unmittelbarer Nähe des Bedienteils 30 befindet, so dass der Benutzer 180 bei Bedienen der Elektrowerkzeugmaschine 10 unweigerlich einen elektrischen Kontakt zwischen Griffgehäuse 24 und seinem Körper herstellt. Diese elektrische Verbindung ist als Fehlerstromkontakt 156 dargestellt, durch die der Benutzer 180 mit dem ersten Kontakt des Fehlerstromsensors 150 elektrisch verbunden ist. Berührt nun der Benutzer 180 beispielsweise mit seiner freien Hand den Werkzeugbereich 50, so fließt aufgrund des durch den Fehlerstromsensor 150 eingeprägten Spannungspotentials ein Strom 152 über diese zweite Fehlerstromleitung 154, so dass der Fehlerstromsensor 150 einen Fehlerstrom registriert, der über den Körper des Benutzers 180 fließt. In diesem Fall deaktiviert die Schutzsensoreinheit 130 über die Abschaltsignalleitung 132 und die Elektronikeinheit 200 die Antriebseinheit 80 so dass die mechanische Leistungsabgabe des Werkzeugbereichs 50 unterbrochen wird. Wichtig ist hierbei, dass die Kontaktstelle im Griffbereich 40 so angeordnet ist, dass diese beim ordnungsgemäßen Bedienen des Handwerkzeugs stets vom Benutzer 180 berührt werden muss, um ein korrektes Funktionieren der Schutzschaltung zu garantieren. Dies kann beispielsweise durch Anordnung der Kontaktierung 156 unmittelbar am oder auf dem Bedienelement 30 der Elektrowerkzeugmaschine 10 sichergestellt werden. Im Normalfall hat der Kontakt keinen Einfluss auf den Benutzer 180, es fließt kein Strom, da der Stromkreis nicht geschlossen ist. Berührt der Benutzer 180 die metallene Sonotrode 50, so entsteht ein leitender Kontakt 154, so dass der Stromkreis geschlossen wird und ein geringer, für den Benutzer 180 ungefährlicher und nicht wahrnehmbarer Strom 152 kommt zum Fließen. Dieser Fehlerstromfluss kann direkt oder mittels des Stromsensors 150 durch die Auswerteelektronik der Schutzsensoreinheit 130 registriert werden, die ab einem Schwellwert von zum Beispiel 100 µA ein Abschalten der Ultraschallgeneratorantriebseinheit 80 über die Abschaltsignalleitung 132 bewirkt.

In einer weiteren Ausführungsform gemäß der Fig. 6 kann auf elektrische Kontaktstellen im Griffbereich verzichtet werden, in dem ein frequenzsensitives Auswerteverfahren benutzt wird. Hierbei wird der metallische Sonotrodenkörper des Werkzeugbereichs 50 mittels einer elektronischen Schwingkreisschaltung, die in der Schutzsensoreinheit 130 umfasst ist, mit einer für den Benutzer 180 ungefährlichen hochfrequenten Wechselspannung eingeprägt. Bei Berührung der Sonotrode 50 durch den Benutzer 180 wird durch diesen eine parasitäre Kapazität sowie gegebenenfalls eine Dämpfung 162 in den Sensorikschwingkreis eingebracht, wodurch die eingeprägte Schwingung in ihrer Resonanzfrequenz verändert und gegebenenfalls gedämpft wird. Diese Änderung kann durch den Schwingkreisverstimmungssensor 160 erkannt werden, wobei ebenfalls eine Abschaltung der Ultraschallantriebseinheit 80 über die Abschaltsignalleitung 132 und die Elektronikeinheit 200 bewirkt wird. Je nach Art der Veränderung der Schwingung kann menschliches Gewebe von anderen Materialien zum Beispiel Metallen oder Holz unterschieden werden, um ein zuverlässiges Ansprechen der Sicherheitsschaltung zu erreichen.

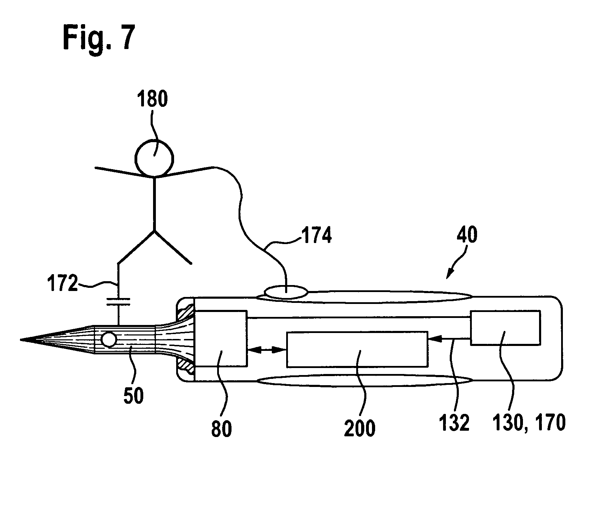

Schließlich zeigt Fig. 7 schematisch ein weiteres Ausführungsbeispiel einer Elektrowerkzeugmaschine 10 mit Schutzsensoreinheit. Hierbei kann z.B. ein Verfahren ähnlich dem aus der DE 696 24 124 T2 für eine kapazitive Näherungssensorsteuerung auf Basis einer kapazitiven Abstandsmessung herangezogen werden. Im Gegensatz zu der in der DE 696 24 124 T2 beschriebenen Anwendung liegt dem kapazitiven Näherungssensor das Prinzip zugrunde, dass erst die Berührung des gefährlichen Bauteils - in diesem Fall die aktive Sonotrode - erkannt wird. Somit kann eine deutlich einfachere Auswerteelektronik eingesetzt werden. Hierzu umfasst die Elektrowerkzeugmaschine 10 einen Bewegungssensor 170 auf Basis eines kapazitiven Berührungssensors 172. Der Benutzer 180 ist analog wie bei der fehlerstrombasierten Schutzsensoreinheit durch seine das Werkzeug führende Hand mittels einer kapazitiven Sensorleitung 174 mit einer Elektrode des Bewegungssensors 170 verbunden. Berührt der Benutzer 180 mit einem Körperteil den Werkzeugbereich 50 und somit die metallische Sonotrode, so stellt der kapazitive Berührungssensor 172 eine Veränderung der Kapazität fest, wodurch auf eine Berührung des Benutzers 180 geschlossen wird, so dass die Schutzsensoreinheit 130 bei erheblicher Änderung der Kapazität des kapazitiven Berührungssensors 172 über die Abschaltsignalleitung 132 die Antriebseinheit 180 deaktiviert und die Sonotrode ausschaltet, um den Benutzer 180 vor Verletzungen zu schützen.

Eine Abschaltung des Anregungsaktors eines Ultraschallwerkzeugs ist ausreichend, da nach Abschaltung des Generators ohne weitere Maßnahmen sehr schnell innerhalb weniger Millisekunden ein Stillstand der Sonotrode gewährleistet ist. Im Gegensatz zu anderen Werkzeugen mit großen rotierenden Massen ist im Falle eines Ultraschallschwingers sehr wenig kinetische Energie abzubauen, so dass nach Abschalten der Anregung aufgrund innerer Dämpfung die mechanische Ausgangsleistung sehr schnell abgebaut ist.

## Patentansprüche

1. Handgehaltene Elektrowerkzeugmaschine (10) umfassend
- ein Gehäuse (20) mit einem Griffbereich (40),
- einen Werkzeugbereich (50) für ein linear und/oder oszillierend antreibbares Werkzeug (60),
- ein gehäuseseitiges Bedienteil (30) zur benutzerseitigen Aktivierung des Werkzeugs (60) und/oder der Elektrowerkzeugmaschine (10),
- eine Antriebseinheit (80) zur Erzeugung einer Arbeitsbewegung des Werkzeugs (60),
- eine Elektronikeinheit (200) zum Beaufschlagen der Antriebseinheit (80) mit wenigstens Steuer- und/oder Regelsignalen,
- eine Betriebsspannungseinheit (90) zur Bereitstellung einer elektrischen Gleichspannung,
wobei die Antriebseinheit (80) wenigstens einen Anregungsaktor (100) als Ultraschallaktor mit einem Volumen anregungsaktiven Materials umfasst, welcher
- im Betrieb von der Betriebsspannungseinheit (90) elektrisch versorgt ist,
- von der Elektronikeinheit (200) gesteuert oder geregelt ist,
**dadurch gekennzeichnet, dass** eine Schutzsensoreinheit (130) umfassend einen Näherungs- oder Berührungssensor (140) zur Berührungserfassung eines Körperteils eines Benutzers (180) mit dem Werkzeugbereich (50) so mit der Antriebseinheit (80) gekoppelt ist, dass bei ungewolltem Nähern oder Berühren eine Abschaltung der Antriebseinheit (80) erfolgt, wobei die Schutzsensoreinheit (130) in der Elektronikeinheit (200) angeordnet ist, und der Näherungs- oder Berührungssensor (140) im oder am Werkzeugbereich (50) angeordnet ist, und der Näherungs- oder Berührungssensor (140) einen Schwingkreisverstimmungssensor (160) zur Messung einer Verstimmung eines hochfrequenten Schwingkreises oder einen Bewegungssensor (170) umfasst.

2. Handgehaltene Elektrowerkzeugmaschine nach Anspruch 1, **dadurch gekennzeichnet, dass** der Bewegungssensor (170) ein kapazitiver Berührungssensor (172), ein PIR-Sensor oder ein Ultraschallsensor ist.

3. Handgehaltene Elektrowerkzeugmaschine nach einem der vorhergehenden Ansprüche, **dadurch gekennzeichnet, dass** der Näherungs- oder Berührungssensor (140) mit der Elektronikeinheit (200) zur Schnellabschaltung der Antriebseinheit (80) verbunden ist.

4. Handgehaltene Elektrowerkzeugmaschine nach Anspruch 3, **dadurch gekennzeichnet, dass** zur Schnellabschaltung der Antriebseinheit (80) vorgesehen ist
- eine Ausbildung eines elektrischen Kurzschlusses des Anregungsaktors (100) und/oder
- eine Aufschaltung einer Gleichspannung und/oder
- eine Aufschaltung eines Dämpfungswiderstands und/oder
- eine antizyklischen Anregung zum aktiven Dämpfen des Anregungsaktors (100).

5. Handgehaltene Elektrowerkzeugmaschine nach einem der vorhergehenden Ansprüche, **dadurch gekennzeichnet, dass** der Näherungs- oder Berührungssensor (140) ausgebildet ist, eine Abschaltung der elektrischen Gleichspannung der Betriebsspannungseinheit (90) zu bewirken.

6. Handgehaltene Elektrowerkzeugmaschine nach einem der vorhergehenden Ansprüche, **dadurch gekennzeichnet, dass** der Näherungs- oder Berührungssensor (140) ausgebildet ist, eine Verriegelung oder Deaktivierung des Bedienteils (30) zu bewirken.

7. Handgehaltene Elektrowerkzeugmaschine nach Anspruch 6, **dadurch gekennzeichnet, dass** nach der Deaktivierung des Bedienteils (30) eine Wiederinbetriebnahme bewirkbar ist durch
- Aktivieren eines Quittungssignals und/oder
- Ausschalten und Einschalten der Elektrowerkzeugmaschine (10) und/oder
- Wiedereinschalten nach einer vorgegebenen Wartezeit.

8. Handgehaltene Elektrowerkzeugmaschine nach einem der vorhergehenden Ansprüche, **dadurch gekennzeichnet, dass** die Schutzsensoreinheit (140) ausgebildet ist, bei Unterschreiten einer vorbestimmbaren Näherungsdistanz oder Berührungsstärke die Ausgabe eines optischen und/oder akustischen und/oder haptischen Warnsignals zu bewirken und/oder eine Abschaltung der Antriebseinheit (80) bei Unterschreiten einer vorbestimmbaren Näherungsdistanz oder Berührungsstärke zu bewirken.

## Claims

1. Hand-held electric machine tool (10), comprising
- a housing (20) with a handle region (40),
- a tool region (50) for a tool (60) which can be driven linearly and/or in oscillating fashion,
- a housing-side operating part (30) for user activation of the tool (60) and/or the electric machine tool (10),
- a drive unit (80) for producing a working movement of the tool (60),
- an electronics unit (200) for applying at least control and/or regulating signals to the drive unit (80),
- an operating voltage unit (90) for providing a DC electrical voltage,
wherein the drive unit (80) comprises at least one excitation actuator (100) as ultrasound actuator with a volume of excitation-active material, which excitation actuator
- is supplied electrical power during operation by the operating voltage unit (90),
- and is controlled or regulated by the electronics unit (200),
**characterized in that** a protective sensor unit (130) comprising a proximity or tactile sensor (140) for detecting that a body part of a user (180) is in touching contact with the tool region (50) is coupled to the drive unit (80) in such a way that, in the case of undesired proximity or touching contact, the drive unit (80) is shut down, wherein the protective sensor unit (130) is arranged in the electronics unit (200), and the proximity or tactile sensor (140) is arranged in or on the tool region (50), and the proximity or tactile sensor (140) comprises a resonant circuit detuning sensor (160) for measuring detuning of a highfrequency resonant circuit or a motion sensor (170).

2. Hand-held electric machine tool according to Claim 1, **characterized in that** the motion sensor (170) is a capacitive tactile sensor (172), a PIR sensor or an ultrasound sensor.

3. Hand-held electric machine tool according to one of the preceding claims, **characterized in that** the proximity or tactile sensor (140) is connected to the electronics unit (200) for quick-response shutdown of the drive unit (80).

4. Hand-held electric machine tool according to Claim 3, **characterized in that**, for quick-response shutdown of the drive unit (80), provision is made for
- forming an electrical short circuit of the excitation actuator (100) and/or
- connecting a DC voltage and/or
- connecting a damping resistor and/or
- anticyclic excitation for actively damping the excitation actuator (100).

5. Hand-held electric machine tool according to one of the preceding claims, **characterized in that** the proximity or tactile sensor (140) is designed to shut down the DC electric voltage of the operating voltage unit (90).

6. Hand-held electric machine tool according to one of the preceding claims, **characterized in that** the proximity or tactile sensor (140) is designed to effect locking or deactivation of the operating part (30).

7. Hand-held electric machine tool according to Claim 6, **characterized in that**, after the deactivation of the operating part (30), the machine tool can be brought back into operation by
- activating an acknowledgement signal and/or
- switching off and on the electric machine tool (10) and/or
- switching on said electric machine tool again after a predetermined wait time.

8. Hand-held electric machine tool according to one of the preceding claims, **characterized in that** the protective sensor unit (140) is designed to effect the output of an optical and/or acoustic and/or haptic warning signal when a predeterminable proximity distance or touch strength is undershot and/or to effect shutdown of the drive unit (80) when a predeterminable proximity distance or touch strength is undershot.

## Revendications

1. Machine-outil électrique (10) portative comprenant :
- un carter (20) doté d'une zone de poignée (40) ;
- une zone d'outil (50) prévue pour un outil (60) pouvant être entraîné de façon linéaire et/ou oscillante ;
- une partie de commande (30) disposée du côté du carter permettant à l'utilisateur d'activer l'outil (60) et/ou la machine-outil électrique (10) ;
- une unité d'entraînement (80) permettant à l'outil (60) de réaliser un mouvement de travail ;
- une unité électronique (200) permettant d'envoyer à l'unité d'entraînement (80) au moins des signaux de commande et/ou de réglage ;
- une unité de mise sous tension de fonctionnement (90) permettant de mettre à disposition une tension électrique continue ;
l'unité d'entraînement (80) comprenant au moins un actionneur d'excitation (100) prenant la forme d'un actionneur ultrasonique avec un certain volume de matière sensible à l'excitation, ladite unité :
- étant alimentée sur le plan électrique en situation de fonctionnement de l'unité de mise sous tension de fonctionnement (90) ;
- étant commandée ou réglée par l'unité électronique (200) ;
**caractérisée en ce qu'**une unité de détection de protection (130) comprenant un capteur d'approche ou de contact (140) permettant de détecter le contact d'une partie du corps d'un utilisateur (180) avec la zone d'outil (50) est couplée de telle sorte à l'unité d'entraînement (80) qu'en cas d'approche ou de contact involontaires, une déconnexion de l'unité d'entraînement (80) se produit, l'unité de détection de protection (130) étant disposée dans l'unité électronique (200) et le capteur d'approche ou de contact (140) étant disposé dans la zone d'outil (50) ou au niveau de celle-ci et le capteur d'approche ou de contact (140) comprenant un capteur de stimulation de circuit d'oscillation (160) servant à mesurer une stimulation d'un circuit d'oscillation à haute fréquence ou d'un capteur de mouvement (170).

2. Machine-outil électrique portative selon la revendication 1, **caractérisée en ce que** le capteur de mouvement (170) est un capteur de contact (172) capacitif, un capteur PIR ou un capteur à ultrasons.

3. Machine-outil électrique portative selon l'une quelconque des revendications précédentes, **caractérisée en ce que** le capteur d'approche ou de contact (140) est relié à l'unité électronique (200) pour réaliser une déconnexion rapide de l'unité d'entraînement (80).

4. Machine-outil électrique portative selon la revendication 3, **caractérisée en ce que** l'on prévoit les éléments suivants pour la déconnexion rapide de l'unité d'entraînement (80) :
- la réalisation d'un court-circuit électrique de l'actionneur d'excitation (100) ; et/ou
- le raccordement d'une tension continue ; et/ou
- le raccordement d'une résistance d'amortissement ; et/ou
- la mise en place d'une excitation anticyclique permettant d'amortir activement l'actionneur d'excitation (100).

5. Machine-outil électrique portative selon l'une quelconque des revendications précédentes, **caractérisée en ce que** le capteur d'approche ou de contact (140) est réalisé pour provoquer une déconnexion de la tension électrique continue de l'unité de mise sous tension de fonctionnement (90).

6. Machine-outil électrique portative selon l'une quelconque des revendications précédentes, **caractérisée en ce que** le capteur d'approche ou de contact (140) est réalisé pour provoquer un verrouillage ou une désactivation de la partie de commande (30).

7. Machine-outil électrique portative selon la revendication 6, **caractérisée en ce qu'**après la désactivation de la partie de commande (30), une remise en fonctionnement peut être provoquée par :
- l'activation d'un signal de réception ; et/ou
- la déconnexion et la connexion de la machine-outil électrique (10) ; et/ou
- la remise en fonctionnement après un temps d'attente prédéfini.

8. Machine-outil électrique portative selon l'une quelconque des revendications précédentes, **caractérisée en ce que** l'unité de détection de protection (140) est réalisée pour provoquer, en cas de passage en dessous d'une distance d'approche ou d'une force de contact pouvant être prédéfinies, l'émission d'un signal d'avertissement optique et/ou acoustique et/ou haptique et/ou pour provoquer une déconnexion de l'unité d'entraînement (80) en cas de passage en dessous d'une distance d'approche ou d'une force de contact pouvant être prédéfinies.
